# EUROPÄISCHE PATENTSCHRIFT

(11) **EP 0 509 982 B1**
(45) Veröffentlichungstag und Bekanntmachung des Hinweises auf die Patenterteilung: **15.02.1995**
(21) Anmeldenummer: 92890092.7
(22) Anmeldetag: 14.04.1992
(51) Int. Cl.: F02M 31/12

(54) **Mit Alkohol oder Alkoholmischkraftstoffen betriebene Brennkraftmaschine mit einer Kaltstarteinrichtung**
Internal combustion engine using alcohol or a mixture of alcohol with other fuels having a cold start system
Moteur à combustion interne utilisant de l'alcool ou un mélange d'alcool avec d'autres carburants ayant un système de démarrage à froid

(30) Priorität: 18.04.1991 AT 819/91
(43) Veröffentlichungstag der Anmeldung: 21.10.1992
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Quissek, Friedrich, Dipl.-Ing.Dr., A 8071 Dörfla (AT); Hulak, Klaus, Dipl.-Ing., A-8045 Graz (AT)
(74) Vertreter: Krause, Walter, Dr. Dipl.-Ing.

(56) Entgegenhaltungen:
- EP-A- 0 267 645
- DE-A- 3 940 510
- FR-A- 2 566 843
- US-A- 4 713 524
- PATENT ABSTRACTS OF JAPAN vol. 6, no. 260 (M-180)(1138) 18. Dezember 1982 & JP-A-57 153 964

## Beschreibung

Die Erfindung bezieht sich auf eine mit Alkohol oder Alkoholmischkraftstoffen betriebene Brennkraftmaschine mit äußerer Gemischbildung und Fremdzündung, mit einem parallel zum Hauptluftstrom vorgesehenen Nebenluftstrom, der mit einem Einlaßkanal der Brennkraftmaschine eine Strömungsverbindung besitzt, wobei im Nebenluftstrom eine Kaltstarteinrichtung mit einem ein elektrisches Heizelement aufweisenden Verdampfungsbereich sowie einem mit Kraftstoff versorgten Kaltstartventil angeordnet ist.

Brennkraftmaschinen mit äußerer Gemischbildung zeigen beim Betrieb mit Alkohol und Alkoholmischkraftstoffen mit hohem Alkoholanteil Startprobleme bei Umgebungstemperaturen unter +18°C. Es sind daher bei niedrigen Umgebungstemperaturen Kaltstarteinrichtungen notwendig, um einen problemlosen Start zu gewährleisten.

Aus der DE-OS 25 36 432 die als nächstliegender Stand der Technik angesehen wird, ist eine Brennkraftmaschine der eingangs genannten Art bekannt, bei welcher in einem eine Hauptgemischbildungseinrichtung umgehenden Neben-Ansaugkanal eine Kaltstarteinrichtung mit einer elektrisch betriebene Heizvorrichtung vorgesehen ist. Die nötige Luft für das Kaltstartgemisch wird vom Hauptluftansaugkanal abgezweigt, wobei die Strömungsverbindung durch eine Absperrvorrichtung unterbrochen werden kann. Durch die Aufwärmung des Kraftstoff-Luft-Gemisches wird zwar die Startfreudigkeit der Brennkraftmaschine bei niedrigen Umgebungstemperaturen verbessert, die Rekondensation des verdampften Kraftstoffes an den noch kalten Wänden des Neben- und Haupt-Ansaugkanals während des relativ langen Strömungsweges zu den Einlaßventilen kann aber nicht verhindert werden. Aus diesem Grund und wegen des Fehlens einer genauen Luftregelung ist das exakte Nachfahren eines definierten Luftzahlverlaufes während der Warmlaufphase nicht möglich. Die dabei auftretenden großen Abweichungen vom gewünschten Luft-Kraftstoff-Verhältnis bewirken starke Schwankungen in der Laufruhe und in der Qualität der Emissionen.

Weiters ist beispielsweise aus der DE-OS 25 23 408 eine Kaltstarteinrichtung einer mit Alkohol betriebenen Brennkraftmaschine mit einer zentralen Gemischbildung bekanntgeworden, bei welcher eine sehr kleine Menge des Kraftstoffes vor der Hauptkraftstoff-Zuführeinrichtung dem Luftansaugrohr der Brennkraftmaschine zugeführt wird. Die kleine Kraftstoffmenge wird mit einem Teil der das Luftansaugrohr durchströmenden Ansaugluft zu einem zündfähigen Kraftstoff-Luft-Gemisch vermischt und anschließend nach der Zündung durch eine Zündvorrichtung verbrannt. Auf diese Weise wird die dem Vergaser zugeführte Luft vorgewärmt, was jedoch mit einer Verminderung des Sauerstoffanteiles der Ansaugluft verbunden ist und sich in einer relativen Verschlechterung der Zündfähigkeit des Kraftstoff-Luft-Gemisches und einer Verschlechterung des Emissionsverhaltens auswirkt. Ein weiterer Nachteil der bekannten Einrichtung besteht darin, daß die im Hauptluftstrom des Einlaßkanals liegende Heizeinrichtung - aufgrund des Kühleffektes der zugeführten Verbrennungsluft - eine relativ große Energieaufnahme aufweist. Weiters besteht, wie bei der bereits beschriebenen DE-OS 25 36 432, die Gefahr der Rekondensation des verdampften Kraftstoffes an den noch kalten Wänden des relativ langen Saugrohres, wodurch alle in diesem Zusammenhang genannten Nachteile auftreten.

Aufgabe der vorliegenden Erfindung ist es, die Nachteile der eingangs genannten Einrichtungen zu vermeiden und eine Kaltstarteinrichtung vorzuschlagen, mit welcher während der Warmlaufphase das Nachfahren eines genau definierten Luftzahlverlaufes mit minimalen Abweichungen ermöglicht wird, wobei eine Rekondensation des verdampften Kraftstoffes im Saugrohr verhindert und die Energieaufnahme des Heizelementes minimiert werden soll.

Diese Aufgabe wird erfindungsgemäß dadurch gelöst, daß der Verdampfungsbereich im Nebenluftstrom durch mindestens eine Verdampfungskammer gebildet ist, in welche das als luftunterstütztes, elektrisches Einspritzventil ausgeführte Kaltstartventil einmündet, und das elektrische Heizelement mit Kraftstoff beaufschlagt, wobei die Luftzufuhr zum Einspritzventil von einem Leerlaufsteller der Brennkraftmaschine geregelt ist und über einen Luftkanal in einen vom Kaltstartventil und dessen Gehäuse begrenzten Ringraum erfolgt, und die möglichst kurz gehaltene Strömungsverbindung zum Einlaßkanal der Brennkraftmaschine nahe dem Einlaßventil einmündet. Es ist dabei wesentlich, die Verbindungsleitungen möglichst kurz auszuführen und nahe beim Einlaßventil im Einlaßkanal einmünden zu lassen, um Rückkondensation des aus der Leitung in den Kanal austretenden Startgemisches weitgehend zu vermeiden. Die Einspritzmenge des elektrischen Einspritzventils kann dabei über das elektronische Motormanagement gesteuert werden. Die durch die Kaltstarteinrichtung geleitete Ansaugluftmenge kann durch den elektrischen Leerlaufsteller - gesteuert über das Kennfeld der Brennkraftmaschine - eingestellt werden.

In einer Weiterbildung der Erfindung ist vorgesehen, daß das elektrische Heizelement, vorzugsweise ein PTC-Heizelement, am Boden der Verdampfungskammer angeordnet ist, deren Wände mit einer Wärmeisolierung versehen sind, und auch die Strömungsverbindung wärmeisolierend ausgeführt ist. Dabei kann die Strömungsverbindung selbst aus einem wärmeisolierenden Material bestehen oder mit einem solchen beschichtet sein. Weiters ist es vorteilhaft, wenn das PCT-Heizelement abhängig von der Motortemperatur steuerbar ist.

Abhängig vom Hubraum und der Zylinderzahl der Brennkraftmaschine können unter Umständen mehrere Verdampfungskammern notwendig sein, um die Verbindungsleitungen zwischen Verdampfungskammern und Einlaßkanal möglichst kurz zu halten bzw. um die zum Start benötigte Gemischmenge zur Verfügung stellen zu können. In weiterer Ausgestaltung der Erfindung können daher bei einer Mehrzylinder-Brennkraftmaschine vorzugsweise die Verdampfungskammern jeweils zwischen zwei Einlaßkanälen angeordnet sein, wobei von jeder Verdampfungskammer jeweils zwei Verbindungskanäle zu den beiden benachbarten Einlaßkanälen führen. Damit ist eine besonders kompakte Bauweise gewährleistet, wobei beispielsweise bei einer Vierzylinder-Brennkraftmaschine zwei Verdampfungskammern benötigt werden.

Schließlich ist bei einer Brennkraftmaschine, bei welcher jedem Zylinder ein Haupteinspritzventil zugeordnet ist (Multi Point Fuel Injection) vorgesehen, daß das Haupteinspritzventil im Einlaßkanal im Bereich der Strömungsverbindung zur Verdampfungskammer angeordnet ist.

Die Erfindung wird im folgenden anhand der Zeichnungen näher erläutert. Es zeigen:
Fig. 1 eine Kaltstarteinrichtung nach der Erfindung,
Fig. 2 einen Schnitt nach der Linie II-II in Fig. 1,
Fig. 3 eine Ausführungsvariante der Erfindung und
Fig. 4 eine typische Kaltstartsequenz.

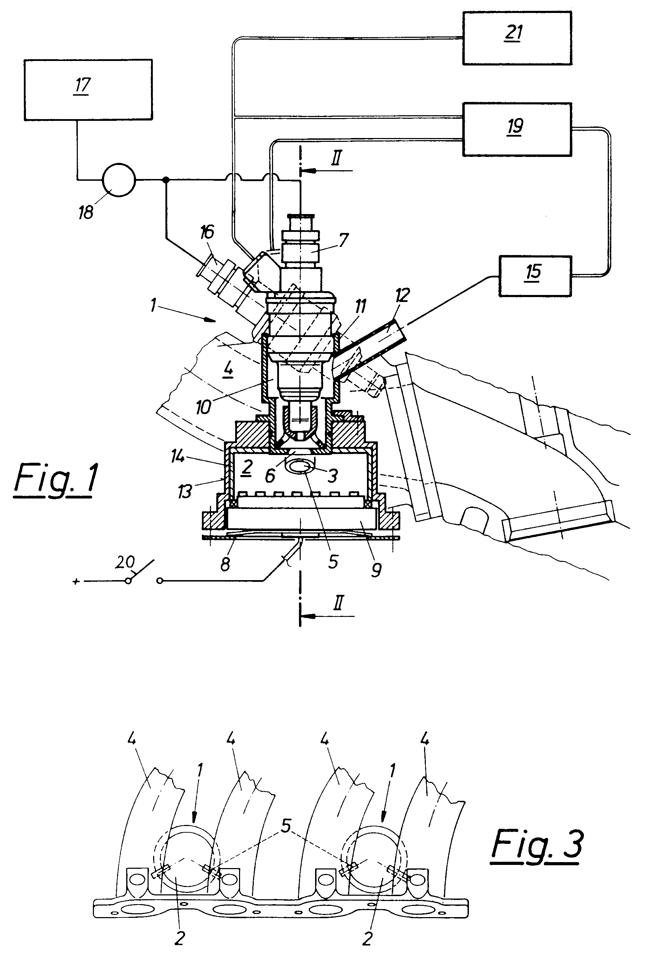

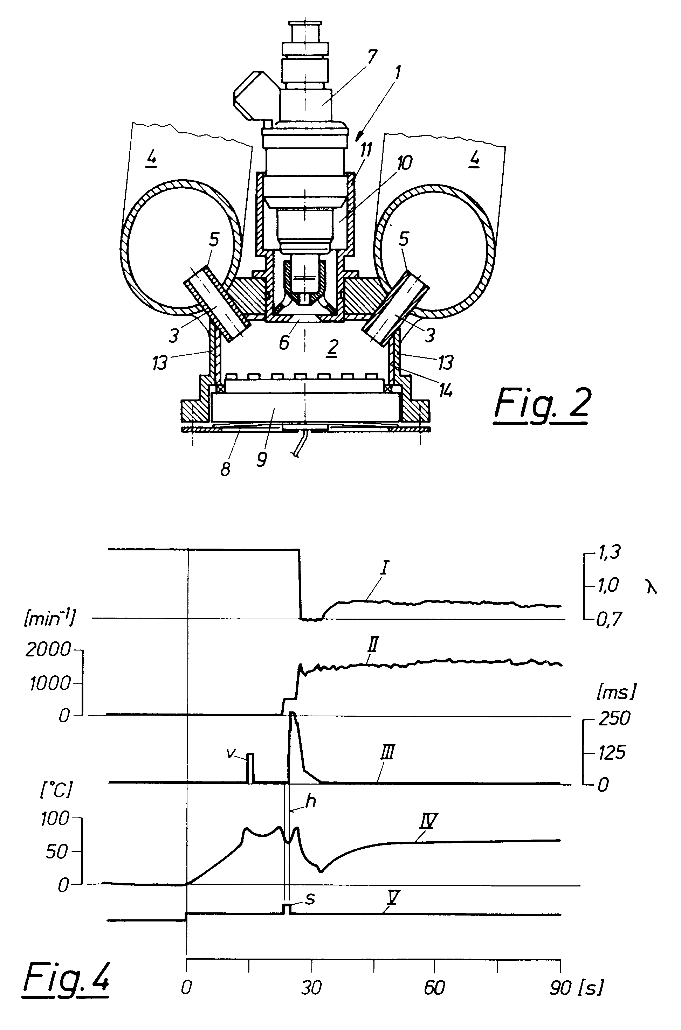

Die in Fig. 1 und 2 dargestellte Kaltstarteinrichtung 1 weist eine Verdampfungskammer 2 auf, welche über eine Strömungsverbindung 3 mit einem Einlaßkanal 4 der Brennkraftmaschine verbunden ist. Wie aus Fig. 2 ersichtlich, können bei einer Mehrzylinder-Brennkraftmaschine die Verdampfungskammern 2 jeweils zwischen zwei Einlaßkanälen 4 angeordnet sein, wobei von jeder Verdampfungskammer 2 je zwei die Strömungsverbindung 3 bildende Verbindungskanäle 5 ausgehen und in die benachbarten Einlaßkanäle 4 einmünden. Es ist auch möglich, die Verdampfungskammer 2 nur über eine Wandöffnung mit dem Einlaßkanal zu verbinden.

Durch eine Öffnung 6 der Verdampfungskammer 2 mündet das als elektrisches Einspritzventil ausgeführte Kaltstartventil 7, wobei der aus dem Einspritzventil austretende Kraftstoffstrahl auf ein am Boden 8 der Verdampfungskammer 2 angeordnetes PTC-Heizelement 9 auftrifft und verdampft. Über die Strömungsverbindung 3 bzw. die Verbindungskanäle 5 wird dann das durch die Verdampfung des Kraftstoffes in der Kammer entstandene Kraftstoff-Luft-Gemisch in die Motorzylinder gesaugt. So wird ein zündfähiges Kraftstoff-Luft-Gemisch zur Verfügung gestellt.

Das Kaltstartventil 7 ist von einem Ringraum 10 umgeben, welcher zum Teil vom Kaltstartventil selbst und zum anderen Teil von seinem Gehäuse 11 begrenzt wird. In diesen Ringraum 10 führt ein Luftkanal 12, über welchen die Luftzufuhr vom elektrischen Leerlaufsteller 15 der Brennkraftmaschine in die Verdampfungskammer 2 erfolgt. Um den Wärmeverlust der Verdampfungskammer 2 gering zu halten, sind deren Wände 13 mit einer Wärmeisolierung 14 versehen. Auch die Strömungsverbindung 3 kann wärmeisolierend ausgeführt sein.

Das Haupteinspritzventil 16 mündet im Bereich der Strömungsverbindung 3 in den Einlaßkanal 4 und wird gemeinsam mit dem Kaltstartventil 7 von einer mit einem Tank 17 verbundenen Kraftstoffpumpe 18 mit Kraftstoff versorgt.

Eine elektronische Steuereinheit 19 steht sowohl mit dem Haupteinspritzventil 16 als auch mit dem Kaltstartventil 7 und dem Leerlaufsteller 15 der Brennkraftmaschine in Verbindung. Das Kaltstartventil 7 steht weiters mit einem Voreinspritzungssteuergerät 21 in Verbindung. Die Ansteuerung des Heizelementes 9 erfolgt über einen in seiner Schaltcharakteristik von der Motortemperatur abhängigen Schalter 20.

Die in Fig. 3 schematisch dargestellte Ausführungsvariante zeigt eine Vierzylinder-Brennkraftmaschine mit zwei jeweils zwischen zwei Einlaßkanälen 4 angeordneten Verdampfungskammern 2.

In dem in Fig. 4 dargestellten Diagramm, in welchem auf der Abszisse die Zeit nach dem Start der Heizeinrichtung in Sekunden aufgetragen ist, wird das Verhalten verschiedener Motorparameter während eines Kaltstartes dargestellt. Die Kurve I zeigt den typischen Verlauf des Kraftstoff/Luftverhältnisses Lambda, die Kurve II die Motordrehzahl in min ⁻¹, die Kurve III die Einspritzimpulsdauer des Kaltstartventils ms, die Kurve IV die Temperatur des Heizelementes in °C sowie die Kurve V den Schaltzeitpunkt s des Anlassers.

Bei sehr niedrigen Umgebungstemperaturen hat sich für einen spontanen Motorstart eine Voreinspritzung v einer festgelegten Kraftstoffmenge zu einem Zeitpunkt, wo die Oberflächentemperatur des PTC-Elementes höher als die Siedetemperatur des benutzten Kraftstoffes ist, mit einer anschließenden Verdampfungszeit von bis zu 20 Sekunden vor erstmaliger Betätigung des Anlassers als zielführend erwiesen. Die Haupteinspritzung h wird verzögert aktiviert um ein ungestörtes Einsaugen des erwärmten Kraftstoffdampf-Luftgemisches zu ermöglichen und die ersten Zündungen nicht durch flüssige Kraftstoffteilchen zu beeinflussen.

## Patentansprüche

1. Mit Alkohol oder Alkoholmischkraftstoffen betriebene Brennkraftmaschine mit äußerer Gemischbildung und Fremdzündung, mit einem parallel zum Hauptluftstrom vorgesehenen Nebenluftstrom, der mit einem Einlaßkanal der Brennkraftmaschine eine Strömungsverbindung besitzt, wobei im Nebenluftstrom eine Kaltstarteinrichtung (1) mit einem ein elektrisches Heizelement (9) aufweisenden Verdampfungsbereich sowie einem mit Kraftstoff versorgten Kaltstartventil (7) angeordnet ist, **dadurch gekennzeichnet**, daß der Verdampfungsbereich im Nebenluftstrom durch mindestens eine Verdampfungskammer (2) gebildet ist, in welche das als luftunterstütztes, elektrisches Einspritzventil ausgeführte Kaltstartventil (7) einmündet, und das elektrische Heizelement (9) mit Kraftstoff beaufschlagt, wobei die Luftzufuhr zum Einspritzventil von einem Leerlaufsteller (15) der Brennkraftmaschine geregelt ist und über einen Luftkanal (12) in einen vom Kaltstartventil (7) und dessen Gehäuse (11) begrenzten Ringraum (10) erfolgt, und die möglichst kurz gehaltene Strömungsverbindung (3) zum Einlaßkanal (4) der Brennkraftmaschine nahe dem Einlaßventil einmündet.

2. Brennkraftmaschine nach Anspruch 1, **dadurch gekennzeichnet**, daß das elektrische Heizelement (9), vorzugsweise ein PTC-Heizelement, am Boden (8) der Verdampfungskammer (2) angeordnet ist, deren Wände (13) mit einer Wärmeisolierung (14, 14') versehen sind.

3. Brennkraftmaschine nach Anspruch 1 oder 2, **dadurch gekennzeichnet**, daß, wenn das elektrische Heizelement (9) ein PTC-Heizelement ist, das PTC-Heizelement (9) abhängig von der Motortemperatur steuerbar ist.

4. Brennkraftmaschine nach einem der Ansprüche 1 bis 3 mit mehreren Zylindern, **dadurch gekennzeichnet**, daß die Verdampfungskammern (2) jeweils zwischen zwei Einlaßkanälen (4) angeordnet sind und von jeder Verdampfungskammer (2) jeweils zwei Verbindungskanäle (5) zu den beiden benachbarten Einlaßkanälen (4) führen.

5. Brennkraftmaschine nach einem der Ansprüche 1 bis 4, bei welcher jedem Zylinder ein Haupteinspritzventil zugeordnet ist, **dadurch gekennzeichnet**, daß das Haupteinspritzventil (16) im Einlaßkanal (4) im Bereich der Strömungsverbindung (3) zur Verdampfungskammer (2) angeordnet ist.

## Claims

1. Internal combustion engine run on alcohol fuel or an alcohol mixture fuel with external mixture formation and external ignition, with an auxiliary air flow in parallel with the principal air flow, having a flow connection to an induction tract of the engine, a cold start device (1) with a vaporising zone containing an electric heating element (9) and a cold start valve (7) fed with fuel being arranged in the auxiliary air flow, characterised in that the vaporising zone in the auxiliary air flow is formed by at least one vaporising chamber (2) into which opens the cold start valve (7) in the form of an air-backed electric injection valve which causes fuel to impinge on the electrical heating element (9), the supply of air to the injection valve being controlled by an idle-running setting device (15) of the engine and taking place through an air passage (12) into an annular space (10) bounded by the cold start valve (7) and its housing (11), and the flow path (3), which is kept as short as possible, leading into the induction tract (4) of the engine close to the inlet valve.

2. Engine according to claim 1, characterised in that the electric heating element (9) preferably a PTC heating element, is arranged on the floor (8) of the vaporising chamber (2), the walls (13) of which are provided with thermal insulation (14,14').

3. Engine according to claim 1 or 2, characterised in that, where the electric heating element (9) is a PTC heating element, the PTC heating element (9) is controlled in accordance with engine temperature.

4. Engine according to one of claims 1 to 3 and having a number of cylinders , characterised in that the vaporising chambers (2) are each arranged between a pair of induction tracts (4) and from each vaporising chamber (2) two connecting passages (5) lead to the two adjacent induction tracts (4).

5. Engine according to one of claims 1 to 4 in which each cylinder has a principal fuel-injection valve associated with it, characterised in that the principal fuel-injection valve (16) is arranged in the induction tract (4) in the neighbourhood of the flow path (3) to the vaporising chamber (2).

## Revendications

1. Moteur à combustion interne utilisant de l'alcool ou un mélange de carburant avec de l'alcool, avec formation du mélange à l'extérieur et allumage commandé, et comportant une veine d'air auxiliaire en parallèle à la veine d'air principale, et ayant une connexion fluidique avec canal d'admission du moteur, la veine d'air auxiliaire étant équipée d'une installation de démarrage à froid (1) comprenant une zone de vaporisation munie d'un élément électrique chauffant (9) ainsi qu'un injecteur de démarrage à froid (7) assurant l'alimentation en carburant, caractérisé en ce que la zone de vaporisation de la veine d'air auxiliaire est formée par au moins une chambre de vaporisation (2) dans laquelle débouche l'injecteur de démarrage à froid (7) réalisé sous la forme d'un injecteur électrique assisté par l'air, et l'élément chauffant électrique (9) est sollicité par le carburant, l'alimentation en air de l'injecteur étant réglée par un organe de réglage de ralenti (15) du moteur à combustion interne et se faisant par un canal d'air (12) dans une chambre annulaire (10) délimitée par l'injecteur de démarrage à froid (7) et son boîtier (11) et la connexion de fluide (3) est réduite à la longueur minimale pour le canal d'admission (4) du moteur à combustion interne en débouchant à proximité de la soupape d'admission.

2. Moteur à combustion interne selon la revendication 1, caractérisé en ce que l'élément chauffant électrique (9) est de préférence un élément chauffant PTC, prévu sur le fond (8) de la chambre de vaporisation (2) dont les parois (13) sont munies d'une isolation thermique (14).

3. Moteur à combustion interne selon la revendication 1 ou 2, caractérisé en ce que dans le cas d'un élément chauffant électrique (9), constitué par un élément PTC, cet élément (9) est commandé en fonction de la température du moteur.

4. Moteur à combustion interne selon l'une des revendications 1 à 3 à plusieurs cylindres, caractérisé en ce que les chambres de vaporisation (2) se trouvent chaque fois entre deux canaux d'entrée (4) et de chaque chambre de vaporisation (2) partent chaque fois deux canaux de liaison (5) vers les deux canaux d'entrée (4) voisins.

5. Moteur à combustion interne selon l'une des revendications 1 à 4 dans lequel un injecteur principal est associé à chaque cylindre, caractérisé en ce que l'injecteur principal (16) est monté dans le canal d'entrée (4) au niveau de la connexion de fluide (3) vers la chambre de vaporisation.
